# EUROPEAN PATENT APPLICATION

(11) **EP 4 397 600 A1**
(43) Date of publication of application: **10.07.2024**
(21) Application number: 22864201.3
(22) Date of filing: 09.08.2022
(51) Int. Cl.: B65D 90/22, B63B 25/16

(54) **LIQUEFIED HYDROGEN TANK AND METHOD FOR DESIGNING SAME**

(30) Priority: 03.09.2021 JP 2021144154
(71) Applicant: KAWASAKI JUKOGYO KABUSHIKI KAISHA, Kobe-shi, Hyogo 650-8670 (JP)
(72) Inventor: SHIMODA, Taichiro, Hyogo 650-8670 (JP); TOMINAGA, Haruhiko, Hyogo 650-8670 (JP); MOCHIDA, Kunihiko, Hyogo 650-8670 (JP); KANO, Daichi, Hyogo 650-8670 (JP); INOHARA, Masayoshi, Hyogo 650-8670 (JP)
(74) Representative: Bals & Vogel Patentanwälte PartGmbB
(86) International application number: PCT/JP2022/030428
(87) International publication number: WO 2023/032615

(57) **Abstract**

A liquefied hydrogen tank mounted on a ship includes an inner shell storing liquefied hydrogen and an outer shell surrounding the inner shell. At least one of the inner shell or the outer shell is a leakage prevention tank. The leakage prevention tank has such a wall thickness that an initial defect is not propagated beyond a half of the thickness of a wall of the leakage prevention tank during a tank life of the leakage prevention tank.

## Description

### Technical Field

The present disclosure relates to the structure of a liquefied hydrogen tank mounted on a ship (hereinafter referred to as a liquefied hydrogen carrier) that transports liquid hydrogen, and a method of designing the liquefied hydrogen tank.

### Background Art

Known as a cargo tank of a liquefied hydrogen carrier is a cargo tank including: an inner shell storing liquefied hydrogen; an outer shell surrounding the inner shell; and a heat insulating layer located between the inner shell and the outer shell. PTL 1 discloses one example of the cargo tank of the liquefied hydrogen carrier.

Designing and building a ship that transports a liquefied gas are required to be based on the IGC Code (NPTL 1) that is the International Code. The current IGC Code is directed to ships that transport liquefied gases, such as LPG and LNG, and is not directed to liquefied hydrogen carriers, and requirements regarding the transportation of the liquid hydrogen have not been defined.

It is known that a main cause of the propagation of a crack of a cargo tank mounted on a ship is dynamic stress generated by a load repeatedly acting on the cargo tank by the ship motion of a hull. According to a method of designing a Type-C tank based on the IGC Code, since design steam pressure Po is set to be adequately high in consideration of a safety factor, minimum design pressure is also high. To obtain strength corresponding to this minimum design pressure, a wall thickness of the tank is set to be adequately large. As a result, dynamic fluctuating stress of the tank is designed to be adequately small, and the assumed propagation of an initial defect is also designed to be adequately small relative to the wall thickness.
Therefore, the leakage of a liquid cargo is not assumed, and the installation of a secondary protective wall is not required.

### Citation List

### Patent Literature

PTL 1: International Publication No. WO2014/174820

### Non Patent Literature

NPTL 1: International Maritime Organization, "THE INTERNATIONAL CODE FOR THE CONSTRUCTION AND EQUIPMENT OF SHIPS CARRYING LIQUEFIED GASES IN BULK (IGC CODE)" CHAPTER 4 CARGO CONTAINMENT, adopted on 22 May 2014

### Summary of Invention

### Technical Problem

A method of designing a tank (i.e., a Type-A tank or a Type-B tank) other than a Type-C tank which is defined in the IGC Code has been applied to a large-scale, independent liquefied gas transportation cargo tank having a volume of more than 20,000 m³. A method of designing the Type-C tank based on the IGC Code has been mainly applied only to a small-scale tank having a volume of 20,000 m³ or less. This is because if the method of designing the Type-C tank based on the IGC Code is applied to the large-scale tank, the wall thickness of the tank corresponding to the minimum design pressure exceeds a practicable numerical range.

The present disclosure was made under these circumstances, and an object of the present disclosure is to propose, to realize mass transportation of cryogenic liquefied hydrogen, the structure of a liquefied hydrogen tank mounted on a ship and a method of designing the liquefied hydrogen tank, the structure and the method being able to prevent hydrogen of a liquid form or a gas form from leaking regardless of the scale of the liquefied hydrogen tank.

### Solution to Problem

A liquefied hydrogen tank according to the present disclosure is a liquefied hydrogen tank mounted on a ship. The liquefied hydrogen tank includes: an inner shell storing liquefied hydrogen; and an outer shell surrounding the inner shell. At least one of the inner shell or the outer shell is a leakage prevention tank. The leakage prevention tank has such a wall thickness that an initial defect is not propagated beyond a half of a thickness of a wall of the leakage prevention tank during a tank life of the leakage prevention tank.

Moreover, a method of designing a liquefied hydrogen tank according to the present disclosure is a method of designing a liquefied hydrogen tank which is mounted on a ship and includes an inner shell storing liquefied hydrogen and an outer shell surrounding the inner shell, at least one of the inner shell or the outer shell being a leakage prevention tank. The method includes: acquiring, by a first processor, a tank life of the leakage prevention tank, a size of an initial defect of the leakage prevention tank, a temperature of the leakage prevention tank, a stress intensity factor of the leakage prevention tank, and stress generated at the leakage prevention tank; calculating, by the first processor by fatigue crack propagation analysis, a crack propagation amount of the initial defect which is propagated by the stress having the number of cycles corresponding to the tank life; acquiring, by a second processor, the calculated crack propagation amount and a design wall thickness of the leakage prevention tank; when the crack propagation amount does not exceed a half of the design wall thickness, judging by the second processor that the design wall thickness is appropriate; when the crack propagation amount exceeds the half of the design wall thickness, judging by the second processor that the design wall thickness is inappropriate; and determining a wall thickness of the leakage prevention tank such that the wall thickness becomes not less than the design wall thickness which has been judged to be appropriate.

### Advantageous Effects of Invention

The present disclosure can propose the structure of the liquefied hydrogen tank mounted on the ship and the method of designing the liquefied hydrogen tank, the structure and the method being able to prevent hydrogen of a liquid form or a gas form from leaking regardless of the scale of the liquefied hydrogen tank.

### Brief Description of Drawings

FIG. 1 is a diagram showing the schematic configuration of a ship including liquefied hydrogen tanks according to one embodiment of the present disclosure.
FIG. 2 is a lateral sectional view of a liquefied hydrogen carrier.
FIG. 3 is a diagram showing the configuration of a design device for a leakage prevention tank.
FIG. 4 is a functional block diagram of the design device for the leakage prevention tank.

### Description of Embodiments

Next, an embodiment of the present disclosure will be described with reference to the drawings.

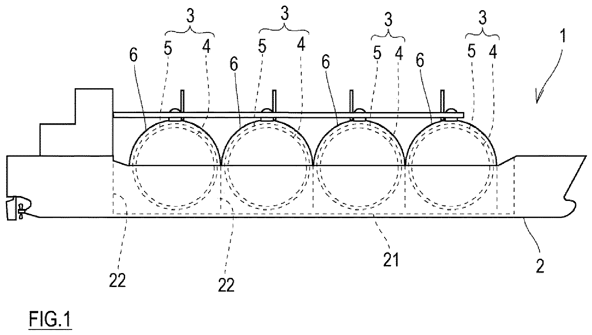

FIG. 1 is a diagram showing the schematic configuration of a ship 1 including liquefied hydrogen tanks 3 according to one embodiment of the present disclosure. The ship 1 shown in FIG. 1 includes a hull 2 and four liquefied hydrogen tanks 3 mounted on the hull 2. The liquefied hydrogen tanks 3 according to the present embodiment are cargo tanks for the transportation of liquefied hydrogen, and the ship 1 is a liquefied hydrogen carrier. In the present embodiment, the liquefied hydrogen tanks 3 are lined up in a ship longitudinal direction. However, when the width of the ship is large, the liquefied hydrogen tanks 3 may be lined up in a ship width direction. Moreover, the number of liquefied hydrogen tanks 3 mounted on the hull 2 may be one or may be two or more.

In the present embodiment, these four liquefied hydrogen tanks 3 are substantially the same in structure as each other. In the present embodiment, the liquefied hydrogen tank 3 is configured as a multilayer tank. When the liquefied hydrogen tanks 3 are mounted on the ship 1, the liquefied hydrogen tanks 3 may be different in structure from each other.

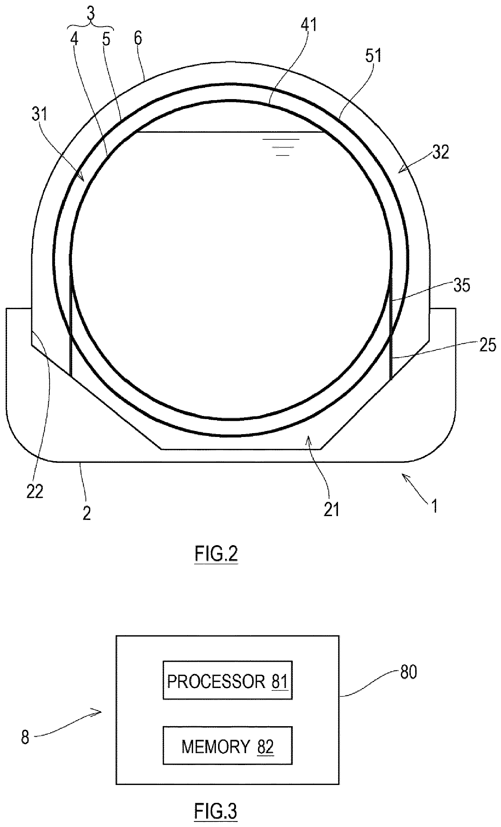

FIG. 2 is a lateral sectional view of the ship 1. As shown in FIGS. 1 and 2, the liquefied hydrogen tank 3 includes: an inner shell 4 storing liquefied hydrogen; and an outer shell 5 surrounding the inner shell 4. The inner shell 4 has a volume of more than 20,000 m³ and not more than 50,000 m³, and therefore, the liquefied hydrogen tank 3 is classified as a relatively large-scale tank.

The inner shell 4 includes a substantially spherical inner shell main body 41. The inner shell 4 may include an inner shell dome projecting upward from the inner shell main body 41. The outer shell 5 includes a substantially spherical outer shell main body 51. The outer shell 5 may include an outer shell dome projecting upward from the outer shell main body 51. Each of the inner shell main body 41 and the outer shell main body 51 does not necessarily have to have a spherical shape and may have a cylindrical shape that is elongated in a horizontal direction or a cylindrical shape that is elongated in a vertical direction. Or, each of the inner shell main body 41 and the outer shell main body 51 may have a cube shape or a cuboid shape.

The inner shell 4 and the outer shell 5 are spaced apart from each other in a shell thickness direction. A region between the inner shell 4 and the outer shell 5 is referred to as a "first region 31." A first heat insulating layer is located in the first region 31. The first heat insulating layer includes a first gas filled in the first region 31 and thermal insulation.

The first region 31 filled with the first gas has substantially atmospheric pressure or is in a low vacuum state. The first gas is a hydrogen gas or a helium gas. The atmospheric pressure is about 10⁵ Pa. However, since the pressure of the first region 31 changes depending on temperature, the ship motion of the hull 2, and the like in some cases, "substantially atmospheric pressure" in the present specification and the claims may denote about 10⁵ Pa and pressure higher than about 10⁵ Pa within a range of pressure fluctuation. Moreover, the low vacuum state denotes pressure lower than the atmospheric pressure, i.e., pressure between 10⁵ Pa and 10² Pa. When the first gas is the hydrogen gas, a gas phase portion of the inner shell 4 and the first region 31 may communicate with each other such that a vaporized gas generated in the inner shell 4 flows into the first region 31. As described above, the liquefied hydrogen tank 3 according to the present embodiment does not include a vacuum heat insulating system. However, a vacuum heat insulating layer may be located between the inner shell 4 and the outer shell 5 in such a manner that a heat insulating layer is located in the first region 31, and the first region 31 is set to a vacuum state.

The hull 2 includes hold spaces 21 that are open upward. The hold spaces 21 are lined up in the ship longitudinal direction and are separated from each other by walls 22. Then, a lower portion of the inner shell 4 and a lower portion of the outer shell 5 are accommodated in the corresponding hold space 21. An upper portion of the outer shell 5 is covered with a tank cover 6. The outer shell 5 is surrounded by the walls 22 and the tank cover 6 as components of the hull 2 which form the hold space 21. A region surrounded by the outer shell 5, the tank cover 6, and the walls 22 of the hold space 21 is referred to as a "second region 32." A second heat insulating layer is located in the second region 32. The second heat insulating layer includes: thermal insulation located around an outer wall of the outer shell 5; and a second gas filled in the second region 32.

The second region 32 filled with the second gas has substantially atmospheric pressure. The pressure of the second region 32 is not especially limited but may be higher than the pressure of the first region 31. The second gas contains at least one of: an inert gas, such as nitrogen; or dry air. For example, the second region 32 may be filled with the dry air, and the inert gas may be held by the second heat insulating layer.

A pair of skirts 25 that are spaced apart from each other in the ship longitudinal direction are located in each hold space 21. The skirts 25 support the outer shell 5. Moreover, a pair of supports 35 supporting the inner shell main body 41 are located between the inner shell 4 and the outer shell 5. In the present embodiment, the skirts 25 are located on extended lines of the supports 35. However, the arrangement of the supports 35 and the skirts 25 is not limited to the present embodiment.

### Tank Type of Liquefied Hydrogen Tank 3

The tank type of the liquefied hydrogen tank 3 will be described in detail.

The outer shell 5 is configured as an independent tank that is independent from the hull 2, and the liquefied hydrogen tank 3 is an independent tank as a whole. The independent tank is a self-supporting tank, does not constitute part of the hull structure, and is not essential from the viewpoint of the strength of the hull.

At least one of the inner shell 4 or the outer shell 5 is a leakage prevention tank. The leakage prevention tank has such a wall thickness that an initial defect is not propagated beyond a half of the thickness of a wall of the leakage prevention tank during a tank life of the leakage prevention tank. Since the assumed propagation of the initial defect in such leakage prevention tank is adequately small with respect to the wall thickness (tank thickness), the leakage of the liquid or gas stored in the leakage prevention tank is not assumed. The leakage prevention tank defined as above corresponds to a Type-C tank defined in the IGC Code from the viewpoint that the leakage of the stored liquid or gas is not assumed.

In the present embodiment, both of the inner shell 4 and the outer shell 5 are the leakage prevention tanks. In the liquefied hydrogen tank 3 according to the present embodiment, the liquefied hydrogen is stored in the inner shell 4, and the hydrogen gas is filled in the first region 31 between the inner shell 4 and the outer shell 5. Therefore, it is difficult to determine whether the hydrogen gas in the first region 31 is the hydrogen gas which has leaked from the inner shell 4 or the hydrogen gas which was filled in the first region 31 in advance. Since it is difficult to detect the leakage of the liquefied hydrogen from the inner shell 4 as above, the inner shell 4 is especially required to have a configuration that does not cause the leakage of the liquid hydrogen. Therefore, it is desirable that at least the inner shell 4 be the leakage prevention tank. When the inner shell 4 is the leakage prevention tank, and the outer shell 5 is not the leakage prevention tank, a required level of fracture strength with respect to the outer shell 5 lowers, and the thickness of the outer shell 5 can be reduced. This leads to a cost reduction of the amount of materials. Moreover, in the present embodiment, it is desirable that the outer shell 5 be the leakage prevention tank to prevent the combustible hydrogen gas in the first region 31 from leaking from the outer shell 5. Furthermore, when the outer shell 5 is the leakage prevention tank, and the first region 31 is filled with the first gas other than the hydrogen gas or is vacuum, the inner shell 4 does not have to be the leakage prevention tank.

### Method of Designing Leakage Prevention Tank of Liquefied Hydrogen Tank 3

A method of designing the leakage prevention tank that is the inner shell 4 or the outer shell 5 included in the liquefied hydrogen tank 3 will be described in detail.

FIG. 3 is a diagram showing the schematic configuration of a design device 8 for the leakage prevention tank. The method of designing the leakage prevention tank is executed by using the design device 8. The design device 8 includes at least one computer 80. The computer 80 includes a processor 81 and a memory 82 that stores a program executed by the processor 81, information, and the like. The memory 82 is connected to the processor 81 such that the processor 81 can read information from the memory 82 and write information in the memory 82. Moreover, an input device, an output device, an auxiliary storage, a communication interface, and the like may be connected to the processor 81. The functionality of the design device 8 disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

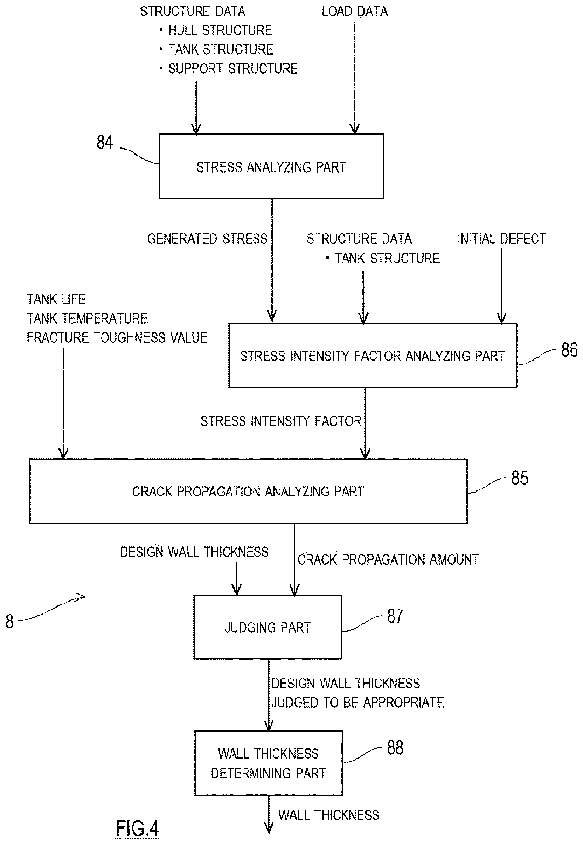

FIG. 4 is a functional block diagram of the design device 8. The design device 8 includes functional parts that are: a stress analyzing part 84; a fatigue crack propagation analyzing part 85 that calculates a crack propagation amount; a stress intensity factor analyzing part 86 that calculates a stress intensity factor; a judging part 87; and a wall thickness determining part 88. The functional parts may be configured by the single computer 80 or may be distributedly configured by the computers 80.

To execute the method of designing the leakage prevention tank, a design wall thickness is set in the design device 8. The design wall thickness is any value and is set within a numerical range that is executable as a wall plate of the leakage prevention tank. For example, when the wall plate of the leakage prevention tank is a steel plate, the design wall thickness may be set within a range of 60 mm or less. When the wall plate of the leakage prevention tank is a non-steel plate, the design wall thickness may be set within a range of 80 mm or less.

The method of designing the leakage prevention tank includes (1) a stress analyzing step, (2) a stress intensity factor analyzing step, (3) a crack propagation analyzing step, (4) a judging step, and (5) a wall thickness determining step. The wall thickness determining step may be performed by a designer instead of the wall thickness determining part 88.

### (1) Stress Analyzing Step

Since the ship 1 sails in the waves of the sea, fluctuating pressure generated by the waves acts on a surface of the hull 2. The ship motion of the hull 2 is caused by the fluctuating pressure, and a fluctuating load by inertial force of the liquid hydrogen as the cargo acts on the leakage prevention tank by the acceleration of the ship motion. Thus, fluctuating stress, i.e., dynamic stress is generated at the leakage prevention tank by the fluctuating load. The stress analyzing part 84 calculates the stress generated at the leakage prevention tank, especially a welded portion of the leakage prevention tank by the ship motion of the hull 2 as above.

A stress analysis method performed by the stress analyzing part 84 is not especially limited, and examples thereof include: a numerical analysis method, such as a finite element method; and simulation. For example, the stress analyzing part 84 can calculate generated stress (generated stress distribution of the leakage prevention tank) estimated by: acquiring a fluctuating load generated due to the ship motion of the hull 2 by the waves during sailing and the waves received by the hull 2; applying this fluctuating load to a numerical analysis model of the entire ship 1 including a hull structure, a leakage prevention tank structure, and a tank support structure; and executing numerical analysis. A set wall thickness is incorporated as a parameter in the leakage prevention tank structure. The fluctuating load and the numerical analysis model may be given to the stress analyzing part 84 in advance. The fluctuating load can be calculated based on the state of the route of the ship 1 by simulation or experiment.

### (2) Stress Intensity Factor Analyzing Step

The stress intensity factor analyzing part 86 calculates the stress intensity factor (stress intensity factor distribution of the leakage prevention tank) of a crack. Various stress intensity factor analysis methods are known. The stress intensity factor analysis method executed by the stress intensity factor analyzing part 86 is not especially limited, and one example thereof is a numerical analysis method, such as a finite element method. For example, the stress intensity factor analyzing part 86 calculates the stress intensity factor of the crack by elastic stress analysis by the finite element method by using the numerical analysis model including the generated stress calculated by the stress analyzing part 84, the leakage prevention tank structure including the shape of the welded portion, the size of the initial defect of the leakage prevention tank, and the shape of the crack. The stress intensity factor analyzing part 86 may change the analysis method in accordance with an analysis target portion of the leakage prevention tank.

### (3) Crack Propagation Analyzing Step

The fatigue crack propagation analyzing part 85 calculates the crack propagation amount of the initial defect of the leakage prevention tank by fatigue crack propagation analysis. The fatigue crack propagation analysis method performed by the fatigue crack propagation analyzing part 85 is not especially limited, and examples thereof include: a numerical analysis method, such as a finite element method; and simulation. For example, the fatigue crack propagation analyzing part 85 can calculate the crack propagation amount of the initial defect during the tank life by: acquiring the tank life of the leakage prevention tank, fracture toughness of a material of the leakage prevention tank, the stress intensity factor of the analysis target portion, and the generated stress of the analysis target portion; applying these to a fatigue crack propagation analysis model; and executing the numerical analysis. Pieces of information regarding the tank structure, such as the tank life, the size of the initial defect, the temperature of the leakage prevention tank, and the fracture toughness of the material of the leakage prevention tank, are given to the fatigue crack propagation analyzing part 85 in advance. The size of the initial defect may be any value corresponding to the size of the initial defect which may actually exist. The tank life may be any value corresponding to the life of the ship 1. The number of cycles of the generated stress during the tank life can be estimated based on the tank life. The temperature of the leakage prevention tank is the temperature of the leakage prevention tank when the liquefied hydrogen is in the inner shell 4. The fracture toughness may be the fracture toughness of the material of the leakage prevention tank when the liquefied hydrogen is in the inner shell 4. Used as the stress intensity factor of the analysis target portion may be the stress intensity factor calculated by the stress intensity factor analyzing part 86. Used as the generated stress of the analysis target portion may be the generated stress calculated by the stress analyzing part 84.

### (4) Judging Step

When a requirement that the design wall thickness is "such a wall thickness that the initial defect is not propagated beyond the half of the thickness of the wall during the tank life" is satisfied, the judging part 87 judges that the design wall thickness is "appropriate." When the requirement is not satisfied, the judging part 87 judges that the design wall thickness is "inappropriate." Specifically, the judging part 87 acquires the crack propagation amount of the initial defect during the tank life which has been calculated by the fatigue crack propagation analyzing part 85. When the crack propagation amount does not exceed the half of the design wall thickness (i.e., when the crack propagation amount is not more than the half of the design wall thickness), the judging part 87 judges that the design wall thickness is appropriate. When the crack propagation amount exceeds the half of the design wall thickness, the judging part 87 judges that the design wall thickness is inappropriate.

### (5) Wall Thickness Determining Step

The wall thickness determining part 88 determines the wall thickness of the leakage prevention tank such that the wall thickness becomes not less than the design wall thickness which has been judged to be appropriate by the judging part 87. The leakage prevention tank having the wall thickness determined as above is designed.

According to the above-described method of designing the leakage prevention tank, whether or not the design wall thickness is appropriate is judged based on the crack propagation amount. In addition to this, whether or not the design wall thickness is appropriate may be judged based on the presence or absence of the generation of the instable fracture. In this case, as a judgement index of the instable fracture, the stress intensity factor analyzing part 86 calculates the stress intensity factor of the crack (i.e., the crack in the tank life) generated in such a manner that the initial defect is propagated by the crack propagation amount calculated by the fatigue crack propagation analyzing part 85. When this judgement index is not less than a fracture toughness value, the generation of the instable fracture during the tank life is assumed. Therefore, the judging part 87 acquires the judgement index and the fracture toughness value of the material of the leakage prevention tank. When the judgement index is not less than the fracture toughness value, the judging part 87 judges that the design wall thickness is inappropriate. When the judgement index is less than the fracture toughness value, the judging part 87 judges that the design wall thickness is appropriate.

### Summary

The liquefied hydrogen tank 3 according to the embodiment of the present disclosure is the liquefied hydrogen tank 3 mounted on the ship 1 and includes: the inner shell 4 storing the liquefied hydrogen; and the outer shell 5 surrounding the inner shell 4. At least one of the inner shell 4 or the outer shell 5 is the leakage prevention tank. The leakage prevention tank has such a wall thickness that an initial defect is not propagated beyond a half of a thickness of a wall of the leakage prevention tank during a tank life of the leakage prevention tank.

In the liquefied hydrogen tank 3, both of the inner shell 4 and the outer shell 5 may be the leakage prevention tanks.

In the liquefied hydrogen tank 3, the hydrogen gas may be filled in a region between the inner shell 4 and the outer shell 5, and the inner shell 4 may be the leakage prevention tank.

In the liquefied hydrogen tank 3, the hydrogen gas may be filled in a region between the inner shell 4 and the outer shell 5, and the outer shell 5 may be the leakage prevention tank.

According to the liquefied hydrogen tank 3 configured as above, even when the leakage prevention tank included in the liquefied hydrogen tank 3 has the initial defect, the propagation of the initial defect during the tank life is adequately small with respect to the wall thickness, and therefore, the leakage of the liquid or gas stored in the leakage prevention tank is not assumed. Such leakage prevention tank corresponds to the Type-C tank defined in the IGC Code from the viewpoint that the leakage of the stored liquid or gas is not assumed. Therefore, a secondary protective wall can be omitted from the leakage prevention tank and the liquefied hydrogen tank 3 including the leakage prevention tank.

In the liquefied hydrogen tank 3, the inner shell 4 may have a volume of more than 20,000 m³ and not more than 50,000 m³.

Even when the liquefied hydrogen tank 3 is a relatively large-scale tank as described above, the liquefied hydrogen tank 3 may have a wall thickness that can be actually built, while having a predetermined leakage preventing function.

Moreover, the method of designing the liquefied hydrogen tank 3 according to the present embodiment includes: acquiring, by a first processor (fatigue crack propagation analyzing part 85), the tank life of the leakage prevention tank, the size of the initial defect of the leakage prevention tank, the temperature of the leakage prevention tank, the stress intensity factor of the leakage prevention tank, and the stress generated at the leakage prevention tank; calculating, by the first processor by the fatigue crack propagation analysis, the crack propagation amount of the initial defect which is propagated by the stress having the number of cycles corresponding to the tank life; acquiring, by a second processor (judging part 87), the calculated crack propagation amount and the design wall thickness of the leakage prevention tank; when the crack propagation amount does not exceed the half of the design wall thickness, judging by the second processor that the design wall thickness is appropriate; when the crack propagation amount exceeds the half of the design wall thickness, judging by the second processor that the design wall thickness is inappropriate; and determining the wall thickness of the leakage prevention tank such that the wall thickness becomes not less than the design wall thickness which has been judged to be appropriate. The first processor and the second processor may be physically the same processor or may be processors independent from each other.

According to the above method of designing the liquefied hydrogen tank 3, the tank which does not cause the leakage of the stored gas or liquid while having the wall thickness within a realistic range can be designed.

The above method of designing the liquefied hydrogen tank 3 may further include: calculating, by a third processor (stress intensity factor analyzing part 86), as the judgement index the stress intensity factor of the crack generated in such a manner that the initial defect is propagated during the tank life; acquiring, by a fourth processor (wall thickness determining part 88), the fracture toughness value of the material of the leakage prevention tank; and when the judgement index is not less than the fracture toughness value, judging by the fourth processor that the design wall thickness is inappropriate, since the generation of the instable fracture during the tank life is assumed. The stress intensity factor may be calculated with respect to the shape of the final crack after the tank life or may be repeatedly calculated with respect to the shape of the crack which is being propagated during the tank life. Moreover, the first to fourth processors may be physically the same processor or may be processors independent from each other.

According to the above method, whether or not the design wall thickness is appropriate is further judged based on the presence or absence of the generation of the instable fracture. Therefore, the tank which can more surely prevent the leakage can be designed.

In the above embodiment, the inner shell 4 is typically classified as a large-scale tank. However, the inner shell 4 may be a tank classified as a small-scale tank having a volume of not more than 20,000 m³ and may be the leakage prevention tank. To be specific, the structure of the liquefied hydrogen tank 3 according to the present disclosure and the method of designing the liquefied hydrogen tank 3 according to the present disclosure may be applied to small-scale tanks and large-scale tanks of more than 50,000 m³ regardless of the scale of the tank.

In the above embodiment, the liquefied hydrogen tank 3 is the cargo tank. However, the structure of the liquefied hydrogen tank 3 according to the present disclosure and the method of designing the liquefied hydrogen tank 3 according to the present disclosure may be applied to a fuel tank mounted on the ship 1. In this case, the ship 1 is not limited to the liquefied hydrogen carrier.

The foregoing discussion of the present disclosure has been presented for purposes of illustration and description. The foregoing is not intended to limit the present disclosure to the form or forms disclosed herein. In the foregoing Detailed Description for example, various features of the present disclosure are grouped together in one embodiment for the purpose of streamlining the disclosure. The features of the present disclosure may be combined in alternate embodiments, configurations, or aspects other than those discussed above.

## Claims

1. A liquefied hydrogen tank mounted on a ship,
the liquefied hydrogen tank comprising:
an inner shell storing liquefied hydrogen; and
an outer shell surrounding the inner shell, wherein:
at least one of the inner shell or the outer shell is a leakage prevention tank; and
the leakage prevention tank has such a wall thickness that an initial defect is not propagated beyond a half of a thickness of a wall of the leakage prevention tank during a tank life of the leakage prevention tank.

2. The liquefied hydrogen tank according to claim 1, wherein both of the inner shell and the outer shell are the leakage prevention tanks.

3. The liquefied hydrogen tank according to claim 1, wherein:
a hydrogen gas is filled in a region between the inner shell and the outer shell;
the inner shell is the leakage prevention tank; and
the outer shell is not the leakage prevention tank.

4. The liquefied hydrogen tank according to any one of claims 1 to 3, wherein the inner shell has a volume of more than 20,000 m³ and not more than 50,000 m³.

5. A method of designing a liquefied hydrogen tank which is mounted on a ship and includes an inner shell storing liquefied hydrogen and an outer shell surrounding the inner shell, at least one of the inner shell or the outer shell being a leakage prevention tank,
the method comprising:
acquiring, by a first processor, a tank life of the leakage prevention tank, a size of an initial defect of the leakage prevention tank, a temperature of the leakage prevention tank, a stress intensity factor of the leakage prevention tank, and stress generated at the leakage prevention tank;
calculating, by the first processor by fatigue crack propagation analysis, a crack propagation amount of the initial defect which is propagated by the stress having the number of cycles corresponding to the tank life;
acquiring, by a second processor, the calculated crack propagation amount and a design wall thickness of the leakage prevention tank;
when the crack propagation amount does not exceed a half of the design wall thickness, judging by the second processor that the design wall thickness is appropriate;
when the crack propagation amount exceeds the half of the design wall thickness, judging by the second processor that the design wall thickness is inappropriate; and
determining a wall thickness of the leakage prevention tank such that the wall thickness becomes not less than the design wall thickness which has been judged to be appropriate.

6. The method according to claim 5, further comprising:
calculating, by a third processor, as a judgement index the stress intensity factor of a crack generated in such a manner that the initial defect is propagated during the tank life;
acquiring, by a fourth processor, a fracture toughness value of a material of the leakage prevention tank; and
when the judgement index is not less than the fracture toughness value, judging by the fourth processor that the design wall thickness is inappropriate, since the generation of an instable fracture during the tank life is assumed.
